(19) Europäisches Patentamt
European Patent Office
Office européen des brevets

(11) **EP 4 787 177 A1**

(12) **EUROPEAN PATENT APPLICATION**

(43) Date of publication:
05.08.2026 Bulletin 2026/32

(51) International Patent Classification (IPC):
**G06F 13/40** (2006.01)

(21) Application number: 26152219.7

(22) Date of filing: **16.01.2026**

(52) Cooperative Patent Classification (CPC):
**G06F 13/4045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.01.2025 US 202519042990**

(71) Applicant: **NXP USA, Inc.**
**Austin, TX 78735 (US)**

(72) Inventors:
• **Mari, Ugo**
**5656 AG Eindhoven (NL)**
• **Daniel, Steven**
**5656 AG Eindhoven (NL)**
• **Vertenten, Bart**
**5656 AG Eindhoven (NL)**

(74) Representative: **Schmütz, Christian Klaus Johannes**
**NXP Semiconductors Germany GmbH**
**Intellectual Property Group**
**Beiersdorfstr. 12**
**22529 Hamburg (DE)**

(54) **REPEATER SIGNAL TRANSMISSION**

(57) Embodiments of a repeater, an embedded Universal Serial Bus (eUSB) repeater, and a method of operating a repeater are disclosed. In an embodiment, a repeater includes a buffer configured to store data that is received during a time distance between an input start and a frame slot start, a counter configured to calculate a waiting time before starting frame transmission, and a transmitter configured to transmit predefined data at the frame slot start over a repeater channel and to transmit the data that is stored in the buffer over the repeater channel after the waiting time from the frame slot start.

FIG. 7

**Description**

BACKGROUND

In some architectures, communication devices are designed to repeat traffic between upstream facing ports and downstream facing ports, in either direction, by passing a communication stream through an intermediate data link. Such devices may be referred to as "Hybrid Repeaters" borrowing from embedded Universal Serial Bus 2 (eUSB2) terminology.

SUMMARY

Embodiments of a repeater, an embedded Universal Serial Bus (eUSB) repeater, and a method of operating a repeater are disclosed. In an embodiment, a repeater includes a buffer configured to store data that is received during a time distance between an input start and a frame slot start, a counter configured to calculate a waiting time before starting frame transmission, and a transmitter configured to transmit predefined data at the frame slot start over a repeater channel and to transmit the data that is stored in the buffer over the repeater channel after the waiting time from the frame slot start. Other embodiments are also disclosed.

In an embodiment, the predefined data includes zeros.

In an embodiment, the transmitter is further configured to transmit the data that is stored in the buffer over the repeater channel in a frame slot having the frame slot start after the waiting time from the frame slot start.

In an embodiment, the counter is further configured to generate a counter value that represents the waiting time, and the transmitter is further configured to transmit the data that is stored in the buffer over the repeater channel in a frame slot having the frame slot start after the counter value reaches a predefined value.

In an embodiment, the predefined value is zero.

In an embodiment, the repeater further includes a receiver configured to receive the data during the time distance between the input start and the frame slot start.

In an embodiment, the receiver is further configured to receive additional data in a frame slot having the frame slot start.

In an embodiment, the transmitter is further configured to transmit the data that is stored in the buffer and the additional data over the repeater channel in the frame slot after the waiting time from the frame slot start.

In an embodiment, the counter is further configured to calculate the waiting time before starting the frame transmission in a frame slot having the frame slot start.

In an embodiment, an embedded Universal Serial Bus (eUSB) repeater includes a buffer configured to store data that is received during a time distance between an input start and a frame slot start, a counter configured to calculate a waiting time before starting frame transmission in a frame slot having the frame slot start, and a transmitter configured to transmit leading zeros at the frame slot start over a repeater channel and to transmit the data that is stored in the buffer over the repeater channel in the frame slot after the waiting time from the frame slot start.

In an embodiment, the counter is further configured to generate a counter value that represents the waiting time, and the transmitter is further configured to transmit the data that is stored in the buffer over the repeater channel in the frame slot after the counter value reaches a predefined value.

In an embodiment, the predefined value is zero.

In an embodiment, the eUSB repeater further includes a receiver configured to receive the data during the time distance between the input start and the frame slot start.

In an embodiment, the receiver is further configured to receive additional data in the frame slot.

In an embodiment, the transmitter is further configured to transmit the data that is stored in the buffer and the additional data over the repeater channel in the frame slot after the waiting time from the frame slot start.

In an embodiment, a method of operating a repeater involves storing data that is received during a time distance between an input start and a frame slot start, calculating a waiting time before starting frame transmission, transmitting predefined data at the frame slot start over a repeater channel, and transmitting the data that is stored over the repeater channel after the waiting time from the frame slot start.

In an embodiment, the predefined data includes zeros.

In an embodiment, transmitting the data that is stored over the repeater channel after the waiting time includes transmitting the data over the repeater channel in a frame slot having the frame slot start after the waiting time from the frame slot start.

In an embodiment, calculating the waiting time before starting the frame transmission includes generating a counter value that represents the waiting time, and transmitting the data that is stored over the repeater channel after the waiting time includes transmitting the data over the repeater channel in a frame slot having the frame slot start after the counter value reaches a predefined value.

In an embodiment, the method further includes receiving the data during the time distance between the input start and the frame slot start and additional data in a frame slot having the frame slot start.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 depicts an example of a hybrid repeater re-timer system in accordance with an embodiment of the invention.

Fig. 2 shows a table that summarizes some examples of hub/repeater electrical characteristics.

Fig. 3 shows a table that summarizes some examples of input data definitions to be used to explain and demonstrate latency optimization methods.

Fig. 4 shows a table that contains some examples of time steps definitions and calculations related to a first latency optimization method.

Fig. 5 shows a table that contains some examples of time steps definitions and calculations related to a second latency optimization method.

Figs. 6A and 6B depict an example of a hybrid repeater re-timer system.

Fig. 7 is a process flow diagram of a method of operating a repeater in accordance with an embodiment of the invention.

Fig. 8 depicts an example of a repeater in accordance with an embodiment of the invention.

Fig. 9 depicts an example of a repeater system in accordance with an embodiment of the invention.

Fig. 10 is a process flow diagram of a method of operating a repeater in accordance with an embodiment of the invention.

Throughout the description, similar reference numbers may be used to identify similar elements.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

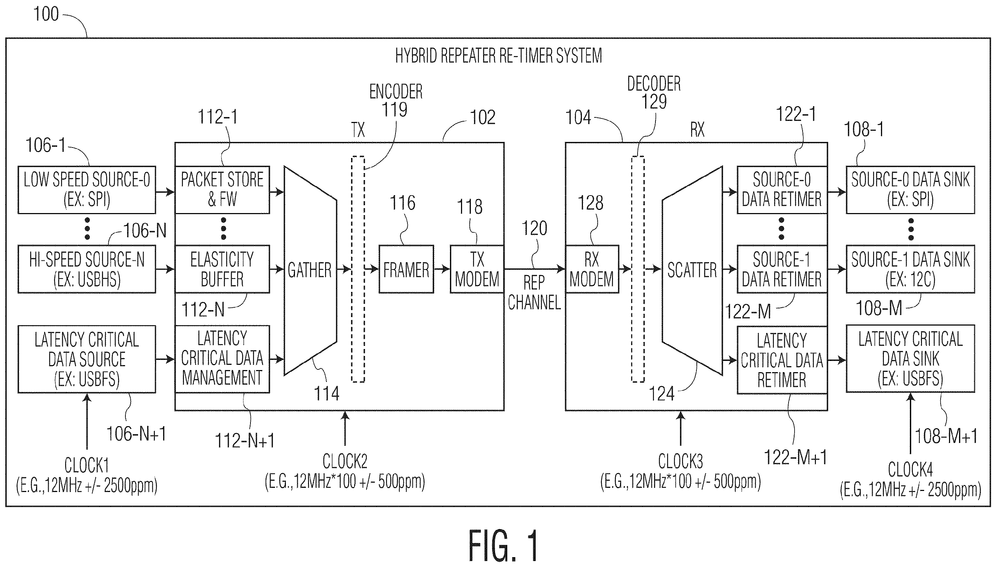

Fig. 1 depicts a hybrid repeater re-timer system 100 in accordance with an embodiment of the invention. In the embodiment depicted in Fig. 1, the hybrid repeater re-timer system 100 has a repeater channel 120 shared across multiple data sources and sinks. In the embodiment depicted in Fig. 1, the hybrid repeater re-timer system 100 includes a transmitter (TX) 102, a receiver (RX) 104, one or more data sources 106-1, ..., 106-N+1, where N is a positive integer, and one or more data sinks 108-1, ..., 108-M+1, where M is a positive integer. The hybrid repeater re-timer system 100 can be used in various applications, such as consumer or enterprise applications, medical applications, computer applications, and/or industrial applications. In the embodiment depicted in Fig. 1, the data sources 106-1, ..., 106-N+1 include a low-speed data source (e.g., Serial Peripheral Interface (SPI)) 106-1, a high-speed data source (e.g., USB High Speed (USBHS)) 106-N, and a latency critical data source (e.g., USB Full Speed (USBFS)) 106-N+1, while the data sinks 108-1, ..., 108-M+1 include a low-speed data source (e.g., SPI) 108-1, a high-speed data source (e.g., I2C) 108-M, and a latency critical data sink (e.g., USBFS) 108-M+1. In some embodiments, the hybrid repeater re-timer system 100 is a wired communications system, e.g., the repeater channel 120 is a wired channel. In some embodiments, the hybrid repeater re-timer system 100 is a wireless communications system, e.g., the repeater channel 120 is a wireless channel. The hybrid repeater re-timer system 100 may be fully or partially implemented as at least one integrated circuit (IC) device. In some embodiments, the transmitter (TX) 102 and the receiver (RX) 104 are located in separate substrates and are implemented as separate IC devices. Although the depicted hybrid repeater re-timer system 100 is shown in Fig. 1 with certain components and described with certain functionality herein, other embodiments of the hybrid repeater re-timer system 100 may include fewer or more components to implement the same, less, or more functionality. In addition, although the hybrid repeater re-timer system 100 is shown in Fig. 1 as being connected in a certain topology, the network topology of the hybrid repeater re-timer system 100 is not limited to the topology shown in Fig. 1. The hybrid repeater re-timer system 100 can be used in wireless and wired applications.

In the embodiment depicted in Fig. 1, the hybrid repeater re-timer system 100 can be used for aggregating multiple wired links to one shared connection, which is the repeater channel 120, or for changing input transmission medium from passive wire to active logic, optical, wireless, or other connection, or for both of these and other reasons. In some embodiments, the hybrid repeater re-timer system 100 is compatible with an USB protocol, which deals with a wide range of signaling conditions. Although some examples of latency-critical serial communication protocol described is the USB2 High-Speed (HS) protocol (480 megabytes per second (Mb/s)), the USB Full-Speed (FS) protocol, or the USB Low-Speed (LS) protocol, the invention is not limited to USB2 protocols and applications.

Hybrid repeater devices may transport multiple traffic streams over a shared intermediate channel, when one or more transported traffic streams have tight latency requirement to adhere to protocol standards and/or enable interoperability within their communication network. For example, serial streams repeated through hybrid repeater devices must maintain their timing specification requirements. Some protocols, such as the USB2 protocol, specify a maximum propagation delay variation allowed through the repeater and also specify maximum propagation delay variation (jitter). Even when it is not enforced by a standard timing specification for a specific protocol, there could be system-level or application-level latency constraints requiring to feature deterministic propagation delay for a specific stream passing through the hybrid repeater. In an example, hybrid repeater devices exchanging multiple data streams from different data sources over one intermediate data link is normally based on regular frames exchange between the two ends of the repeater channel. For example, the conditions to be considered include full synchronous communication (Clock 1 =Clock2=Clock3), ideal channel delay (e.g., zero delay contribution added by the scatter/gather 124, 114, TX/RX modems 118, 128, and framer blocks 116), and perfectly periodic frames (e.g., no frame period jitter). These conditions above do not compromise or limit the applicability of the described methods.

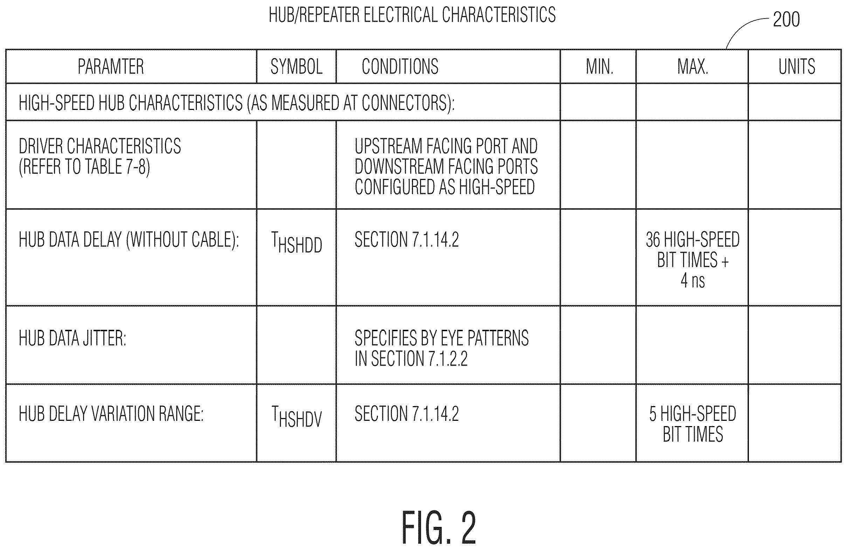

In the hybrid repeater re-timer system 100, while the input and output terminations must sustain a continuous traffic stream, on the intermediate link the serial data is packetized into regular timing slots, each slot containing a certain number of data of a particular input stream. The data rate of the intermediate link must be higher than the sum of all transported traffic rates. The regular sequence of slots transporting one traffic stream forms a frame sequence for that traffic type. The distance between the start of one slot to the start of the next slot is a frame period. To enable latency-critical or latency-sensitive traffic profiles transportation over a hybrid repeater channel, the propagation delay needs to be minimized (e.g., in the USB2 example, this is required to meet the THSHDD USB2 HS max hub data delay parameter (USB2 section 7.1.14.2)) and the propagation delay variation needs to be minimized (e.g., in the USB2 example, this is required to meet the THSHDV HS hub data delay variation range (USB2 section 7.1.14.2). Fig. 2 shows a table 200 that summarizes some examples of hub/repeater electrical characteristics, which are specific to USB2/eUSB2.

The principal latency contributor to the end-to-end propagation delay of the hybrid repeater re-timer system 100 includes a "latency critical data receiver" (e.g., a latency critical data management module 112-N+1 of the TX 102), which contains an Input-RX and a Frame-TX- First-in First-out (FIFO) block, and a "latency critical data repeater" (e.g., a latency critical data retimer 122-M+1 of the RX 104), which contains a Frame-RX-FIFO and an Output-TX block. These two FIFO blocks are responsible to bridge the gap between the continuous eUSB stream and the interrupted (framed) channel stream. To make that, the FIFO blocks add three wait times before eUSB packet re-transmission can start:

1. (T1) When Input starts, wait until 1st slot is allocated on the repeater channel by the traffic scheduler to transmit the received data stream . Slot allocation is normally asynchronous to the Input RX start, so T1 can be considered as a random latency variation factor;
2. (T2) When Frame Slot starts, wait some time before starting Frame transmission. T2 prevents frame transmission underrun caused by not enough Input RX data stored to keep transmission running until the end of the Slot;
3. (T4) When Frame RX starts, wait some time before starting Output transmission. T4 prevents Output transmission underrun caused by not enough Frame-RX data stored to cover the gap between the received slots.

The overall data propagation delay introduced by the FIFO blocks is here referred to as the total propagation delay TPD=T1+T2+T4. Minimizing the end-to-end propagation delay of the hybrid repeater re-timer system 100 involves minimizing TPD and making TPD independent from T1.

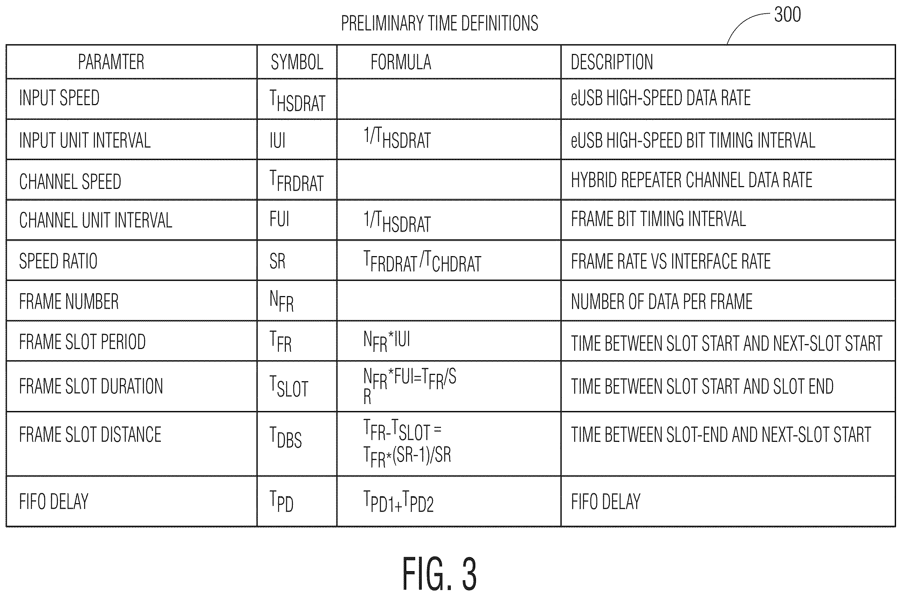

Fig. 3 shows a table 300 that summarizes some examples of input data definitions to be used in the subsequent sections to explain and demonstrate latency optimization methods.

In a first latency optimization method (method-1), all RX data stored while waiting for 1st slot arrival are transmitted over the 1st slot even if not enough data are stored to fill the slot. In an example procedure, when an input RX starts, an input receiver asks a framer block to open a traffic slot. While waiting for the first slot, the input receiver stores received data to a Frame-TX FIFO. When the first slot starts, a frame transmitter schedules to transmit in the first slot the number of data which are currently stored in the TX-FIFO even if the number of collected data is not yet enough to full-fill the first slot. For example, the first section of the slot can be prefilled with empty data (e.g., for USB2HS zero-padding is Ok, as high-speed packets are always started by a leading 'one'). The length of the prefilled section depends on Frame-TX FIFO level reached when the slot starts. In an example, the eUSB data section of the slot is right-aligned to the end of the slot so that last bit received before the slot start is also last bit transmitted in the slot. On the frame receiver side, when the first valid bit in the data section of the first slot is detected, which in the USB case is the first data equal to one that is received, the frame receiver counts the number of input data received in the slot. Based on this number, it derives the minimum waiting time before starting to retransmit the data received from the repeater channel. If data retransmission would be starting soon or too early, then Output TX-data could be consumed before the next slot arrives, thus generating and interrupting the stream on the output. When waiting time expires, the output transmitter starts re-transmission of the input data received during step1 such that last bit received from the channel's slot is the last one transmitted before the next slot arrives.

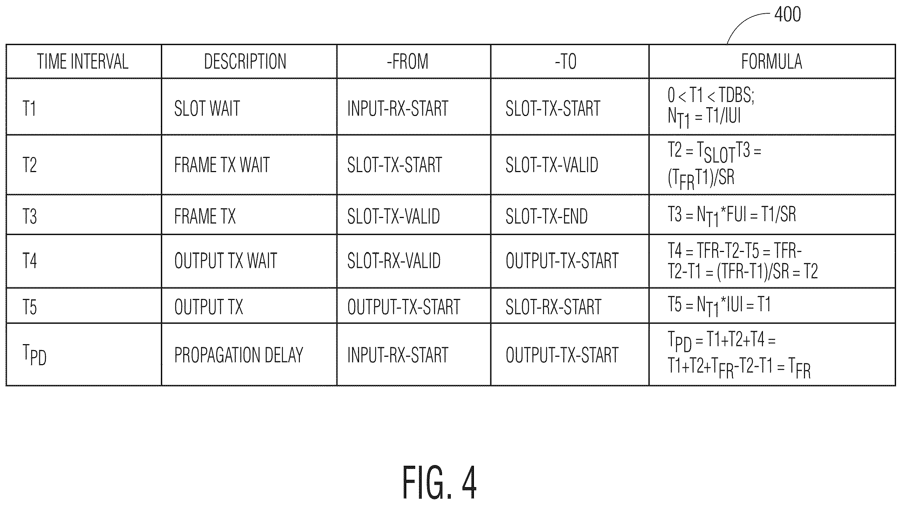

Fig. 4 shows a table 400 that contains time steps definitions and calculations related to method-1. T1: From Input-Rx-start to Frame-Tx-Start. Because of the shared nature of the channel, and to preserve bandwidth performance of the channel, it is not generally possible to synchronize the start of frame transmission to the need of one particular data source. In the general context of asynchronous, periodic, and continuous frames running on the channel, the input receiver cannot start frame transmission as soon as first data are received, but need to store the data and wait until the transmission-slot is started on the channel. During T1 period, data are received from the high speed interface and temporarily stored until slot starts. Number of stored data is $N_{T1}$=T1/IUI (Input Unit Interval).

T2: From Slot-Tx-Start to Slot-Tx-Valid. Even when the slot is started on the channel, transmission of data stored during T1 cannot be started immediately. This is because, when a slot starts, there may not have been enough data collected to completely fill the slot. In fact, it is not possible to start transmission and then complete the remaining part with padding symbols as the far end receiver would not be able to distinguish where the valid data ends and the padding starts. Instead, it is possible to fill the slot with conventional data at the beginning until data valid transmission can start marked by a delimiter. In the USBHS example, the frame transmitter can stuff zeroes at the beginning of the slot knowing that first valid data in a packet is always the first "one," which indicates the start of the sync pattern. T2 is the initial section of the slot where no valid data is yet present. From T2 onwards to the end of the slot, only valid data which had been collected by the receiver during T1 are transmitted. All next slots after the first one will be full as the input receiver will have one frame period to accumulate enough data. When the slot starts, $N_{T1}$ data are available for transmission. During T2, the input receiver keeps storing input data to FIFO, but these data will be sent in the next slot, while the frame transmitter keeps waiting to transmit data which had been stored during T1. The frame transmission of data stored during T1 takes:

$$T3 = N_{TI}*FUI = T1*(FUI/IUI) = T1/SR. \qquad (1)$$

As the transmission of the last of the $N_{T1}$ data must be aligned to the end of the slot, the transmission of data stored during T1 must start T3 ahead the end of the slot such that:

$$T2 = Tslot-T3 = (T_{FR}-T1)/SR . \qquad (2)$$

T2 calculation formula leads to the fact that T2 waiting time depends from a known factor such as the frame period divided by the speed ratio, and from the T1/SR factor which represents the rate at which input data are received for a timer counting on the frame clock, such that T1/SR can be measured by counting the number of received data. Then, the FIFO-TX block inside the latency critical data management module 112-N+1 can calculate and wait T2 by first initializing a timer counting on the frame clock to the $T_{FR}$/SR value, then down count each time a new data is received until the slot arrives to set the T2 value. At this point, the timer keeps counting down at every frame clock until reaching zero and slot data transmission starts.

T3: From Slot-Tx-valid start to Slot-Tx-End. T3 indicates the valid data transmission time on the first useful frame slot. T3 duration is calculated above and is determined by the time employed to transmit on the channel the input data received during T1.

T4: From Slot-Rx-Valid to Output-Tx-Start. When valid data are received from the frame slot, output data re-transmission cannot be started immediately. This is because the transmitter must be able to generate a continuous stream. The number of data contained in the first slot are the ones which were received from the interface in the T1 window. If output re-transmission would start as soon as data are received from the frame, output retransmission will keep going for T1 interval of time and then hold until new data will be received from the next slot thus generating an interrupted stream. Instead, transmission must be able to continue until new data will come in the next slot. As T1 is shorter or equal to the distance between slots, if retransmission would be started before the end of the receiving slot, it would complete before next slot arrives. Consequently, data retransmission can start only after slot-rx ends. T4 calculation formula leads to the fact that T4=T2. Then, the FIFO-RX block inside the latency critical data retimer 122-M+1 can easily calculate and wait T4 by first counting T2 (equal to the duration of slot paddings) and then down-count by the same number. During T4, data are received from frame and stored for transmission to the next slot. No data is re-transmitted to the interface output.

T5: From Output-Tx-Start to Slot-Rx-Start. T5 is the output data re-transmission interval in the first frame. The end of transmission must be aligned to the start of the next slot when new data will be received and immediately retransmitted for continuous transmission. As NT1 number of data has been received from the frame, re-transmission to the repeater output will have same T1 duration: T5 = NT1*IUI = T1.

In an example operation, when an EUSB Rx starts, the EUSB Receiver asks the framer block to open an EUSB slot. While waiting for the 1st slot, the EUSB Receiver stores received data to the Frame-TX FIFO. When the EUSB Slot starts, the EUSB Frame Transmitter schedules the number of EUSB data stored until now for slot transmission. First section of the slot is pre-filled with empty data (zero-padding, as high-speed packets are always started by a leading 'one'). The length of the padding section depends on the Frame-TX FIFO level reached when the slot starts. EUSB data are set aligned to the end of the slot so that last received bit before the slot start is the also last one transmitted in the slot. When the EUSB Frame RX starts, the EUSB Frame Receiver counts number of padding bits received in the slot. Based on this number, it derives how much EUSB data will be received and hence the minimum waiting time required before of starting EUSB re-transmission. (If Tx starts too early, EUSB tx-data would be consumed before next slot arrives thus generating and interrupted stream). When waiting time expires, the EUSB Transmitter starts re-transmission of EUSB data received during step1 so that last received bit is the last one transmitted before next slot arrives.

METHOD-1 RESULTS SUMMARY:

Propagation delay is equal to the frame period, that is equal to the distance between the slot start and next-slot start;

Propagation delay is deterministic and independent from the time interval between when Input Rx starts and the slot start which is normally unpredictable. Indeed, as visible from T2 and T4 formulas, larger/shorter T1 are always compensated by shorter/larger T2+T4 waiting times;

As T2 can be written as function of T1, and T4 as function of T2, a simple implementation can be made to count and wait for T2 and T4 as explained in previous notes;

FIFO Interface to the hybrid repeater system can be serial or parallel.

In a second latency optimization method (method-2), all RX data stored while waiting for 1st slot arrival are transmitted over the 1st slot and also the data received during the slot interval are transmitted in the 1st slot, even if not enough data are stored and received to fill the slot.

In an example procedure, when an input RX starts, an input receiver asks the framer block to open a traffic slot. While waiting for the first slot, the input Receiver stores received data to the Frame-TX FIFO. When the first slot is started by the traffic scheduler on the channel, a frame transmitter schedules for transmission in the slot the number of data which had been received and stored to the TX FIFO since the RX start. Thanks to a lookahead mechanism, the frame transmitter also schedules for transmission in the 1st slot the number of input data not yet stored in FIFO but that are going to be received from the input during the slot interval (frame-tx lookahead). First section of the slot is prefilled with empty data (e.g., for USB2HS zero-padding is Ok, as high-speed packets are always started by a leading 'one'). The length of padding section depends on Frame-TX FIFO level reached when the slot starts and by the number of data that will be received during the slot. Input-rx valid data are transmitted aligned to the end of the slot so that the last bit received during the slot interval is also the also last bit transmitted in the slot. When the first slot valid data section starts, the frame receiver counts number of prefilled bits received in the slot. Based on this number, it derives how many Input-rx data will be received in remaining time of the slot and hence the minimum waiting time needed before starting Output re-transmission (If Tx starts too early, Output tx-data would be consumed before next slot arrives thus generating an interrupted stream to the output). When the wait time expires, the Output Transmitter starts re-transmission of the Input data received during step1 followed by the data being received in the slot so that the last bit received at the end of the slot is the last one transmitted before next slot arrives.

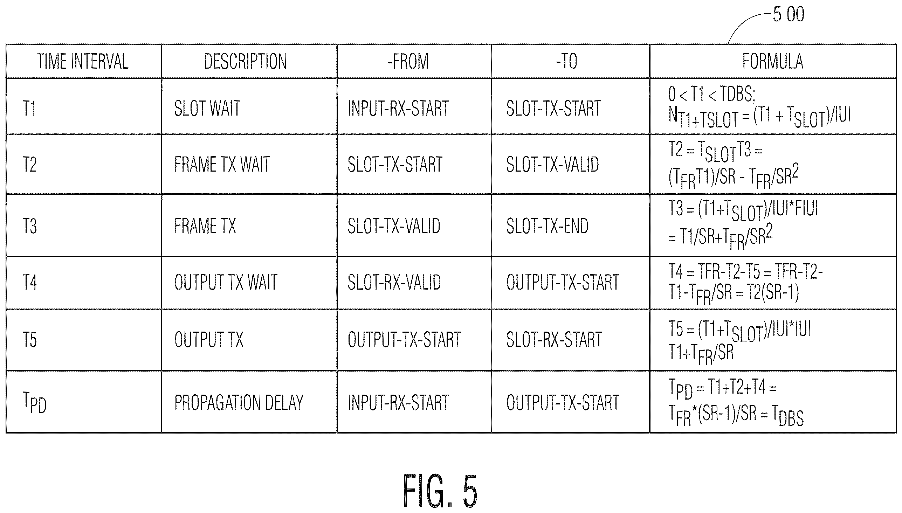

Fig. 5 shows a table 500 that contains some examples of time steps definitions and calculations related to method-2. T1: From Input-Rx-start to Frame-Tx-Start. The description of T1 in the first latency optimization method applies to the second latency optimization method. During T1 interval data are received from the serial interface and temporarily stored until slot starts. Number of data stored during T1 is: $N_{T1}=T1/IUI$.

T2: From Slot-Tx-Start Slot-Tx-Valid. Even when slot is started on the channel, transmission of data stored during T1 cannot be started immediately. This is because, when slot starts, there may not have been collected enough data to completely fill the slot. In fact, it is not possible to start transmission and then complete the remaining part with some paddings as the far end receiver would not be able to distinguish where the valid data ends and the padding starts. Instead, it is possible to fill the slot with conventional data at the beginning until data valid transmission can start marked by a delimiter. In the USBHS example, frame transmitter can stuff zeroes at the beginning of the slot knowing that first valid data in a packet is always the first "one" which indicates the start of the sync pattern. T2 is the initial section of the slot where no valid data is yet present. From T2 onwards to the end of the slot, only valid data which had been collected by the receiver during T1 are transmitted. All next slots after the first one will be full as the input receiver will have one frame period to accumulate enough data. When the slot starts, $N_{T1}$ data are available for transmission. During T2, the input receiver keeps storing received data that will be sent in the current slot while the frame transmitter is off. Number of data received during T1 is:

$$N_{T1} = T1/IUI; \qquad\qquad (3)$$

The number of data received during the slot is:

$$N_{SLOTRX} = T_{SLOT}/IUI = T_{FR}/(SR*IUI) \qquad\qquad (4)$$

The total number of data to be transmitted in the slot is:

$$N_{SLOTTX} = N_{T1} + N_{SLOTRX} = T1/IUI + T_{FR}/(SR*IUI) \qquad\qquad (5)$$

The frame transmission of T1-stored data + Slot-Rx data takes:

$$T3 = N_{SLOTTX}*FUI = T1/SR + T_{FR}/SR^2 \qquad\qquad (6)$$

As the end of data transmission must be aligned to the end of the slot, transmission of data stored during T1 plus the data received during the slot must start T3 ahead of the end of the slot, so: $T2 = Tslot-T3 = (T_{FR}-T1)/SR - T_{FR}/SR^2$

T3: From Slot-Tx-valid start to Slot-Tx-End. T3 indicates the valid data transmission time on the first useful frame slot. T3 duration was calculated above and is determined by the time employed to transmit on the channel the input data received during T1 plus the data received during the slot.

T4: From Slot-Rx-Valid to Output-Tx-Start. When valid data are received from the frame slot, output data re-transmission cannot be started immediately. This is because the transmitter must be able to generate a continuous stream. The amount of data contained in the first slot are the ones which were received from the interface in the T1 window. If output re-transmission would start as soon as data are received from the frame, output retransmission would keep going for T1+Tslot interval of time and then stop thus generating an interrupted stream as T1+Tslot is always shorter or equal to the gap between slots. Instead, transmission must be able to continue until new data will come in the next slot. During T4, data are received from the frame are stored for transmission, but no data is re-transmitted to the interface output. To allow continuous output transmission, the end of the transmission of the data stored during the 1st slot must be aligned to the start of the next slot, when new data will be received and immediately retransmitted thus allowing stream continuity. As $N_{T1+TSLOT}$ number of data has been received from the frame, re-transmission to the repeater output will have same T5 duration equal to:

$$T5 = N_{T1+TSLOT}*IUI = T1+T_{FR}/SR; \qquad\qquad (7)$$

As said, output transmission must start T5 ahead the end of the frame, so:

$$T4 = T_{FR}\text{-}T2\text{-}T5 = T_{FR}\text{–}T2\text{-}T1\text{-}T_{FR}/SR \qquad (8)$$

Note that T4 can be also expressed as function of T2:

$$T4 = T_{FR}\text{–}T2\text{-}T1\text{-}T_{FR}/SR =$$

$$T_{FR} - T_{FR}/SR + T1/SR + T_{FR}/SR^2 \text{-}T1 - T_{FR}/SR =$$

$$= (T_{FR}\text{-}T1) - T_{FR}/SR - T_{FR}/SR + T1/SR + T_{FR}/SR^2 =$$

$$= SR^*(T_{FR}\text{-}T1)/SR - SR^*T_{FR}/SR^2 - T_{FR}/SR + T1/SR + T_{FR}/SR^2 =$$

$$= SR^*((T_{FR}\text{-}T1)/SR - T_{FR}/SR^2) - ((T_{FR}\text{-}T1)/SR - T_{FR}/SR^2) =$$

$$= T2^*(SR\text{-}1) \qquad (9)$$

T5: From Output-Tx-Start to Slot-Rx-Start. T5 is the output data re-transmission time on the first useful frame. T6 duration is calculated above and is determined by the time employed to transmit on the output the data received in the first frame slot.

In an example operation, when an EUSB Rx starts, the EUSB Receiver asks the framer block to open an EUSB slot. While waiting for the 1st slot, the EUSB Receiver stores received data to the Frame-TX FIFO. When EUSB Slot starts, the EUSB Frame Transmitter schedules for slot transmission the number of EUSB data stored until now. The EUSB Frame Transmitter also schedules for slot transmission the number of EUSB data not yet stored in FIFO, but that are going to be received during the slot interval (frame-TX Lookahead). First section of the slot is filled with empty data (zero-padding, as high-speed packets are always started with a leading 'one'). Length of the padding section depends on Frame-TX FIFO level at the slot start and by the number of data that will be received in the slot. EUSB data are set aligned to the end of the slot so that the last bit received at the end of the slot is also the last one transmitted in the slot. When EUSB Frame RX starts, the EUSB Frame Receiver counts number of padding bits received in the slot. Based on this number, it derives how much EUSB data will be received and hence the minimum waiting time required before of starting EUSB re-transmission. (If Tx starts too early, EUSB tx-data would be consumed before next slot arrives thus generating and interrupted stream) When waiting time expires, EUSB Transmitter starts re-transmission of EUSB data received during step1 followed by the data being received in the slot so that last bit received at the end of the 1st slot is also the last one transmitted before next slot arrives.

<u>METHOD-2 RESULTS SUMMARY:</u>

Propagation delay result is different than the frame period by the (SR-1)/SR factor, which is geometrically equal to the distance between the slot start and next-slot start ($T_{DBS}$=distance between slots). If SR=2, this results in 50% latency improvement:

$$T_{PDM2}=T_{PDM1}^*(SR\text{-}1)/SR; \qquad (10)$$

Propagation delay is deterministic and independent from the time interval between when Input Rx starts and the slot start which is normally unpredictable. As visible from T2 and T4 calculation formulas, larger/shorter T1 is compensated by shorter/larger T2 and T4 waiting times;

As T2 can be written as function of T1, and T4 as function of T2, a simple implementation can be done to count and wait the T2 and T4 waiting time.

Compared to method1, method2 requires a bit more sophisticated implementation because of the T2/T4 timing calculation formula, and also because the FIFO Interface to the hybrid repeater system must be serial as the last serial bit received in the slot interval must be immediately put in the frame and sent over the channel, which requires the interface to work at the bit-level granularity;

Method2 delivers significant latency reduction as long as the speed ratio SR is low enough, which means that bandwidth occupied by the transported signal is high enough with respect to the channel bandwidth.

In the embodiment depicted in Fig. 1, the hybrid repeater re-timer system 100 can support re-transmission of latency-critical traffic profiles over hybrid repeater shared communication channels (e.g., the repeater channel 120). In some embodiments, the hybrid repeater re-timer system 100 includes a circuit suitable for high-SR channels (SR channel speed vs input speed >> 1), which is based on method1, and which is suited to re-transmit latency sensitive/critical profiles with low-moderate channel bandwidth occupation as this embodiment performs deterministic propagation delay equal to the frame period ($T_{PD}=T_{FR}$). In some embodiments, the hybrid repeater re-timer system 100 includes a circuit suitable for low-SR channels (SR channel speed vs input speed > 1), which is suited to re-transmit latency critical/sensitive high-speed signals and/or latency critical/sensitive signals over low-power channels as this embodiment performs shorter and deterministic propagation delay ($T_{PD}=T_{FR}*(SR-1)/SR$).

In the embodiment depicted in Fig. 1, the hybrid repeater re-timer system 100 is capable to deliver minimum propagation delay of high speed signals through hybrid repeater devices, where high speed is defined with respect to the speed of the channel. Gain with respect to method1 is (SR-1)/SR where SR is speed ratio between the channel and the interface (e.g., achieves 50% gain if channel speed is twice the speed of the transported serial traffic). The hybrid repeater re-timer system 100 can provide digital technique capable to deliver deterministic propagation delay through hybrid repeater devices, enable hybrid repeaters to support high speed and latency critical traffic profiles, such as, USB2 High-Speed, and enable hybrid repeaters to transport precise timing reference signalling, such as, SOF packets is for Start of Frame with their strict jitter requirement. In some embodiments, the hybrid repeater re-timer system 100 includes a serial-input RX circuit/frame TX circuit, which measures the T1 time distance between input RX start and a frame-slot start and stores data received during T1, calculates the T2(T1) waiting time before of starting Frame transmission, and once started, keeps transmitting the Input-RX data which had been stored during T1 and also transmits the data received during the slot interval, a periodic channel frame structure with regular data slots allocated to transport the serial communication data to the re-transmitting end of the repeater, and a frame RX circuit/serial-output TX circuit, which measures the T2 time distance between slot RX start and Valid RX data start, and temporarily stores data received during T2, calculates the T4 (T2) waiting time before of starting eUSB transmission, and once started, keeps retransmitting the data which had been stored to the RX FIFO during T4 and also transmits the data received during the rest of the slot interval.

In the embodiment depicted in Fig. 1, the transmitter (TX) 102 includes one or more storage units 112-1, ..., 112-N+1 that, for example, include a packet store and forward (FW) module 112-1, an elasticity buffer 112-N, the latency critical data management module 112-N+1, which implements the above described method1 or method2, an optional encoder 119, a gather 114, a framer 116, and a TX modem 118. In some embodiments, at least one of the packet store and forward (FW) module 112-1, the elasticity buffer 112-N, the latency critical data management module 112-N+1, the encoder 119, the gather 114, the framer 116, and the TX modem 118 is implemented in analog, digital, and/or firmware circuity. In some embodiments, the encoder 119 is located between the storage units 112-1, ..., 112-N+1 and the gather 114 or between the framer 116 and the TX modem. In an example operation, the packet store and forward (FW) module 112-1, the elasticity buffer 112-N, the latency critical data management module 112-N+1 receive data from the low-speed data source 106-1, the high-speed data source 106-N, and the latency critical data source 106-N+1, respectively, and send the received data to the gather 114 that aggregates the received data. The encoder 119 encodes the aggregated data to generate encoded data, which is processed by the framer 116, and modulated and outputted by the TX modem 118. In some embodiments, the gather 114 is implemented using a multiplexer or a sum unit. In some embodiments, the encoder 119 is configured to generate symbols based on data from the data sources 106-1, ..., 106-N+1, and the TX modem 118 is configured to transmit information in the symbols over a repeater channel 120. In some embodiments, the data sources include the latency critical data source 106-N+1. In some embodiments, the data sources 106-1, ..., 106-N+1 include a first data source 106-1 with a first data speed and a second data source 106-N with a second data speed, and the first data speed is lower than the second data speed. In some embodiments, the framer 116 is configured to generate frames based on the symbols, where the TX modem 118 is configured to transmit the frames over the repeater channel 120. In some embodiments, the transmitter (TX) 102 is a component of an embedded Universal Serial Bus (eUSB) repeater. In some embodiments, the symbols have a size of four bits or twelve bits. In some embodiments, the symbols include a burst symbol that is composed of four-bit symbols. In some embodiments, the symbols include a clock adjustment symbol or a bus state symbol. In some embodiments, the symbols include a non-repeating (NREP) symbol, a start of packet (SOP) symbol, an extra data (XDAT) symbol, or a non-action (NOP) symbol.

In accordance with an embodiment of the invention, the transmitter (TX) 102 stores data that is received during a time distance between an input start and a frame slot start, calculates a waiting time before starting frame transmission, and transmits predefined data at the frame slot start over a repeater channel and to the data that is stored in the buffer over the repeater channel 120 after the waiting time from the frame slot start. In some embodiments, the predefined data includes zeros. In some embodiments, the transmitter (TX) 102 transmits the data that is stored over the repeater channel in a frame slot having the frame slot start after the waiting time from the frame slot start. In some embodiments, the transmitter (TX) 102 generates a counter value that represents the waiting time and transmits the data that is stored over the repeater channel in a frame slot having the frame slot start after the counter value reaches a predefined value. In some embodiments, the predefined value is zero. In some embodiments, the transmitter (TX) 102 receives the data during the time distance between the input start and the frame slot start. In some embodiments, the transmitter (TX) 102 receives additional data in a frame slot having the frame slot start. In some embodiments, the transmitter (TX) 102 transmits the data that are stored and the additional data that are being received over the repeater channel in the frame slot after the waiting time from the frame slot start. In some embodiments, the transmitter (TX) 102 calculates the waiting time before starting the frame transmission in a frame slot having the frame slot start. In some embodiments, the transmitter (TX) 102 is included in an embedded Universal Serial Bus (eUSB) repeater.

In the embodiment depicted in Fig. 1, the receiver (RX) 104 includes one or more retimer units 122-1, ..., 122-M+1 that can fully recover data, extract an embedded clock and retransmit a fresh copy of the data using a clean clock and for example, include a data retimer 122-1, a data retimer 122-M, a latency critical data retimer 122-M+1, which can implement the above described method1 or method2, a scatter 124, an optional decoder 129, and a RX modem 128. In some embodiments, at least one of the data retimer 122-1, the data retimer 122-M, the latency critical data retimer 122-M+1, the scatter 124, the decoder 129, and the RX modem 128 is implemented in analog, digital, and/or firmware circuity. In some embodiments, the decoder 129 is located between the RX modem 128 and the scatter 124. In an example operation, data received through the repeater channel 120 is demodulated by the RX modem 128, separated by the scatter 124, and decoded by the decoder 129, and the decoded data from the decoder 129 are processed by the data retimer 122-1, the data retimer 122-M, and the latency critical data retimer 122-M+1, and stored in the low-speed data source (e.g., SPI) 108-1, the high-speed data source (e.g., I2C) 108-M, and the latency critical data sink (e.g., USBFS) 108-M+1, respectively. In some embodiments, the scatter 124 is implemented using a demultiplexer. In this embodiment, the input clock Clock2=(12 million hertz (MHz)*100)+/-500 parts per million (ppm) of the TX 102 and the input clock Clock3= (12MHz*100)+/-500ppm of the RX 104 are chosen with a multiplication factor of 100 with respect to the USB Full-Speed data rate (e.g., the clock Clock2=12MHz+/-2500ppm of the TX 102 and the clock Clock3=12MHz+/-2500ppm of the RX 104 are chosen). Lower multiplication factors may be used. In this embodiment, Clock2 and Clock3 run at higher speed with respect to the USB Full-Speed data rate for allowing the repeater to perform all the necessary steps within one bit period, and are also an integer multiple of the data rate to be in line with the USB frequency requirement. Moreover, Clock2 and Clock3 frequency must be high enough to measure and apply the clock adjustment factor with a precision compatible with the max jitter requirement. The indicated +/-500ppm clock frequency tolerance is chosen in case the repeater system 100 can also support the USB High-Speed data rates. Otherwise, if limited to Full-Speed requirement, Clock2 and Clock3 clock frequency precision can be relaxed to +/-2500 ppm.

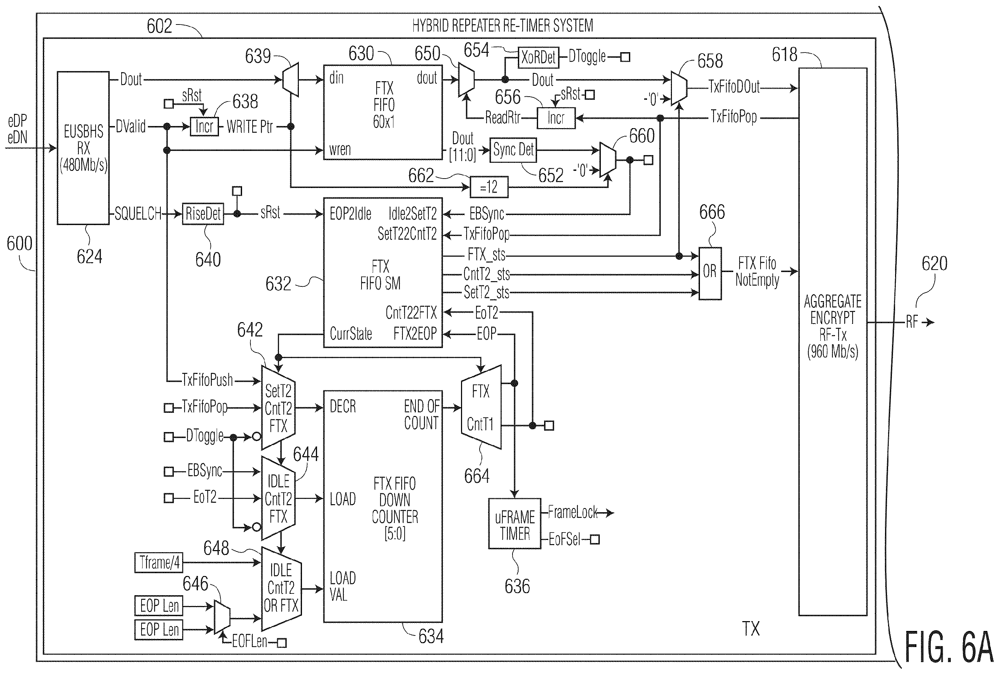

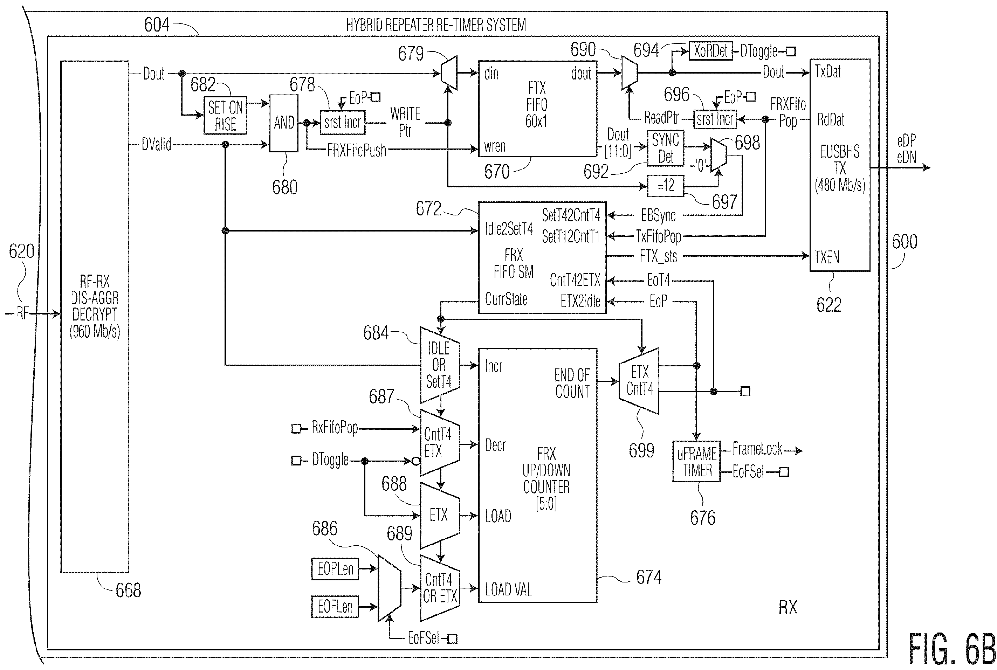

Figs. 6A and 6B depict an embodiment of a hybrid repeater re-timer system 600 supporting downstream traffic repetition. The hybrid repeater re-timer system 600 depicted in Figs. 6A and 6B is an embodiment of the hybrid repeater re-timer system 100 depicted in Fig. 1. However, the hybrid repeater re-timer system 100 depicted in Fig. 1 is not limited to the embodiment depicted in Figs. 6A and 6B. In some embodiments, symmetric embodiment is required to support repeater communication in the upstream direction. The hybrid repeater re-timer system 600 depicted in Figs. 6A and 6B can be used to implement the second latency optimization method (method-2) described above. The first latency optimization method (method-1) can be implement using a hybrid repeater re-timer system that is similar to the hybrid repeater re-timer system 600 depicted in Figs. 6A and 6B.

In the embodiment depicted in Figs. 6A and 6B, the hybrid repeater re-timer system 600 has a repeater channel 620 (e.g., a wireless link, such as a radio frequency (RF) link, or a wired link), which may be a serial link, between a data source (e.g., a latency critical data source) and a data sink (e.g., a latency critical sink). In some embodiments, the hybrid repeater re-timer system 600 has one repeater channel (e.g., the repeater channel 620) shared between multiple data sources and data sinks which communicate each other through the repeater. In the embodiment depicted in Figs. 6A and 6B, the hybrid repeater re-timer system 600 includes a transmitter (TX) 602 and a receiver (RX) 604. The hybrid repeater re-timer system 600 may be fully or partially implemented as at least one integrated circuit (IC) device. In some embodiments, the transmitter (TX) 602 and the receiver (RX) 604 are located in separate substrates and are implemented as separate IC devices.

In the embodiment depicted in Fig. 6A, the transmitter (TX) 602 includes a receiver (RX) unit 624 (e.g., an eUSBHS RX), a First-in First-out (FIFO) Transmit interface (FTX) FIFO buffer 630, a FTX FIFO state machine (SM) 632 (e.g., a digital logic or a microcontroller), a FTX FIFO down counter 634, a micro-Frame (uFrame) timer 636, increment units 638, 656, a rising edge detector 640, multiplexers 639, 642, 644, 646, 648, 650, 658, 660, 664, a synchronization detector 652, an XOR detector 654, a comparator 662, which, for example, checks when 12 bits of data get stored in the FTX FIFO buffer 630 to work as an elasticity buffer, an OR unit 666, and an aggregate & encrypt transmitter 618, which may be implemented in analog, digital, and/or firmware circuity. In some embodiments, the aggregate & encrypt transmitter 618 is configured to generate encrypted frames and transmit the frames over the repeater channel 620. In some embodiments, the transmitter (TX) 602 is a component of an embedded Universal Serial Bus (eUSB) repeater. The transmitter (TX) 602 operates in a similar fashion as the TX 102 depicted in Fig. 1 (e.g., the latency critical data management module 112-N+1, the gather 114, the encoder 119, the framer 116, and the TX modem 118) as described above.

In accordance with an embodiment of the invention, the FTX FIFO buffer 630 is configured to store data that is received during a time distance between an input start and a frame slot start, the FTX FIFO down counter 634 is configured to calculate a waiting time before starting frame transmission, and the aggregate & encrypt transmitter 618 is configured to transmit predefined data at the frame slot start over the repeater channel 620 and to transmit the data that is stored in the buffer over the repeater channel 620 after the waiting time from the frame slot start. In some embodiments, the predefined data include zeros. In some embodiments, the aggregate & encrypt transmitter 618 is further configured to transmit the data that is stored in the FTX FIFO buffer 630 over the repeater channel 620 in a frame slot having the frame slot start after the waiting time from the frame slot start. In some embodiments, the FTX FIFO down counter 634 is further configured to generate a counter value that represents the waiting time, and the aggregate & encrypt transmitter 618 is further configured to transmit the data that is stored in the FTX FIFO buffer 630 over the repeater channel 620 in a frame slot having the frame slot start after the counter value reaches a predefined value. In some embodiments, the predefined value is zero. In some embodiments, the receiver (RX) unit 624 is configured to receive the data during the time distance between the input start and the frame slot start. In some embodiments, the receiver (RX) unit 624 is further configured to receive additional data in a frame slot having the frame slot start. In some embodiments, the aggregate & encrypt transmitter 618 is further configured to transmit the data that is stored in the FTX FIFO buffer 630 and the additional data over the repeater channel 620 in the frame slot after the waiting time from the frame slot start. In some embodiments, the FTX FIFO down counter 634 is further configured to calculate the waiting time before starting the frame transmission in a frame slot having the frame slot start. In some embodiments, the TX 602 is a component of an embedded Universal Serial Bus (eUSB) repeater.

In the embodiment depicted in Fig. 6B, the receiver (RX) 604 includes a TX (TX) unit 622 (e.g., an eUSBHS TX), a FTX First-in First-out (FIFO) buffer 670, a FTX FIFO state machine (SM) 672, a FTX FIFO down counter 674, a uFrame timer 676, increment units 678, 696, a rising edge detector 640, multiplexers 684, 686, 687, 688, 689, 698, 699, a synchronization detector 692, an XOR detector 694, a comparator 697, which, for example, checks when 12 bits of data get stored in the FTX FIFO buffer 670 to work as an elasticity buffer, an AND unit 680, a set-on-rise unit 682, and an RX disaggregate & decrypt receiver (RX) 668, which may be implemented in analog, digital, and/or firmware circuitry. In some embodiments, the RX disaggregate & decrypt receiver (RX) 668 is configured to demodulate signals received over the repeater channel 620, generate symbols based on demodulated signals, and decrypt the symbols. In some embodiments, the receiver (RX) 604 is a component of an embedded Universal Serial Bus (eUSB) repeater. The receiver (RX) 604 operates in a similar fashion as the receiver (RX) 104 depicted in Fig. 1 (e.g., the RX modem 128, the decoder 129, the scatter 124, the latency critical data retimer 122-M+1) as described above.

In the hybrid repeater re-timer system 600 depicted in Figs. 6A and 6B, T2 calculation formula (T2= (TFR-1)/SR-TFR/SR2 leads to the fact that T2 waiting time depends from a known factor such as TFR/SR-TFR/SR2, and from the T1/SR factor which represents the rate at which input data are received for a timer counting on the frame clock, such that T1/SR can be measured by counting the number of received data. The TX 602 can calculate and wait T2 by first initializing the uFrame timer 636 counting on the frame clock to the TFR/SR-TFR/SR2 value (note that if SR=2 this correspond to loading TFR/4 as visible in the diagram), then down count each time a new data is received until the slot arrives will set the T2 value on the FTX FIFO down counter 634. At this point, the FTX FIFO down counter 634 keeps down counting at every channel clock until reaching zero and start slot data transmission. T4 calculation formula leads to the fact that T4=T2(SR-1). Then, the FIFO-RX block can easily calculate and wait T4 by first counting T2 which is equal to the duration of slot prefill portion measured by the frame clock, and then down-count until reaching zero and recycle to T2 for a number of times equal to SR-1. As shown in figure, in case SR=2 then T4=T2 and there is no need to recycle. The hybrid repeater re-timer system 600 also incorporates the elasticity buffer contributions, which are required by real USB High-Speed repeater as clock is not transmitted on the line thus invalidating the initial assumption that Clock1 = Clock2 = Clock3. Elasticity buffers may accumulate 12bits each before of starting Frame-Tx/eUSB Tx and elasticity buffer delays are added to the total latency.

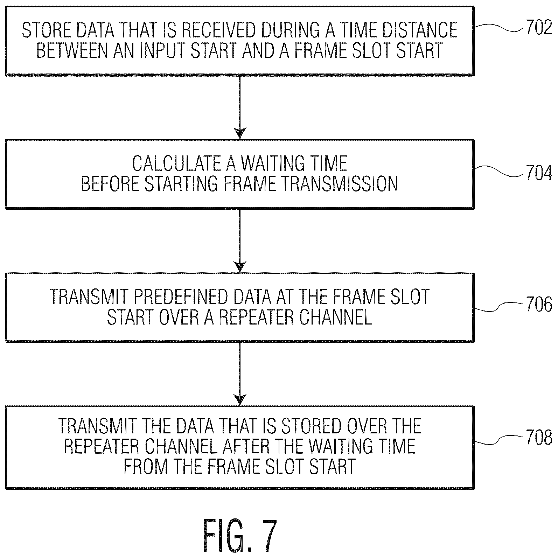

Fig. 7 is a process flow diagram of a method of operating a repeater in accordance with an embodiment of the invention. At block 702, data that is received during a time distance between an input start and a frame slot start is stored. At block 704, a waiting time before starting frame transmission is calculated. At block 706, predefined data is transmitted at the frame slot start over a repeater channel. At block 708, the data that is stored is transmitted over the repeater channel after the waiting time from the frame slot start. In some embodiments, the predefined data includes zeros. In some embodiments, the data that is stored in the buffer is transmitted over the repeater channel in a frame slot having the frame slot start after the waiting time from the frame slot start. In some embodiments, a counter value that represents the waiting time is generated, and the data that is stored in the buffer is transmitted over the repeater channel in a frame slot having the frame slot start after the counter value reaches a predefined value. In some embodiments, the data is received during the time distance between the input start and the frame slot start and additional data is received in a frame slot having the frame slot start. The repeater may be the same as or similar to the TX 102 depicted in Fig. 1, the hybrid repeater re-timer system 100 depicted in Fig. 1, the TX 602 depicted in Fig. 6A, and/or the hybrid repeater re-timer system 600 depicted in Figs. 6A and 6B.

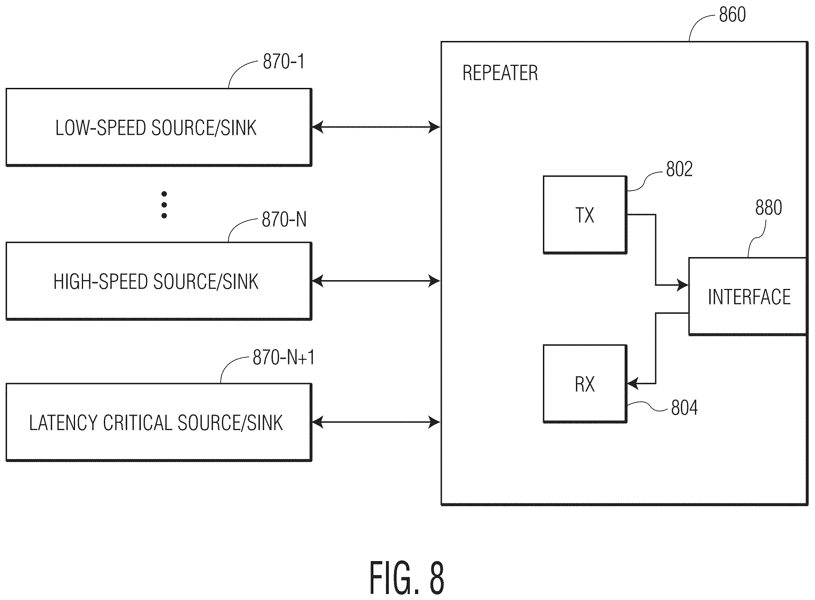

Fig. 8 depicts an example of a repeater 860 in accordance with an embodiment of the invention. In the embodiment depicted in Fig. 8, the repeater 860 includes a transmitter (TX) 802, a receiver (RX) 804, and an interface 880, is connected to one or more data sources and/or sinks 870-1, ..., 870-N+1, where N is a positive integer, through one or more links (e.g., a serial communications interface, such as, an USB interface (e.g., an eUSB interface)). For example, the TX 802 depicted in Fig. 8 may be an embodiment of the TX 102 depicted in Fig. 1 and/or the TX 202 depicted in Fig. 2. In an example, the RX 804 depicted in Fig. 8 may be an embodiment of the RX 104 depicted in Fig. 1 and/or the RX 204 depicted in Fig. 2. In some embodiments, the data sources and/or sinks 870-1, ..., 870-N+1 include a low-speed data source/sink (e.g., Serial Peripheral Interface (SPI)) 870-1, a high-speed data source/sink (e.g., USB High Speed (USBHS)) 870-N, and a latency critical data source/sink (e.g., USB Full Speed (USBFS)) 870-N+1. The repeater 860 may be fully or partially implemented as an integrated circuit (IC) device. In the embodiment depicted in Fig. 8, the transmitter (TX) 802 and the receiver (RX) 804 are located in the same substrate and the repeater 860 is implemented as one IC device (e.g., a system on chip (SOC)) for bi-directional (downstream and upstream) communications. Although the depicted repeater 860 is shown in Fig. 8 with certain components and described with certain functionality herein, other embodiments of the repeater 860 may include fewer or more components to implement the same, less, or more functionality. In addition, although the repeater 860 is shown in Fig. 8 as being connected in a certain topology, the network topology of the repeater 860 is not limited to the topology shown in Fig. 8.

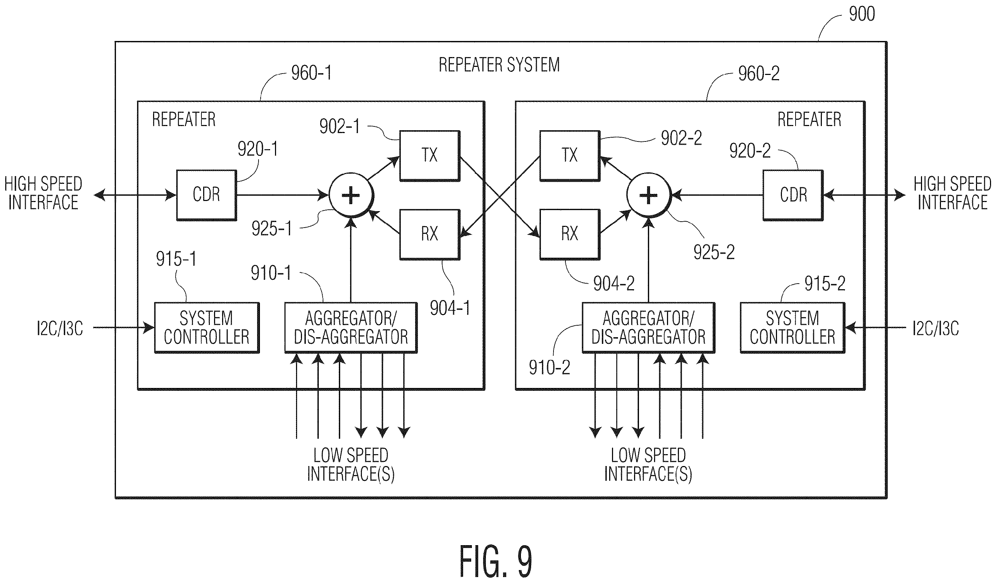

Fig. 9 depicts an example of a repeater system 900 in accordance with an embodiment of the invention. In the embodiment depicted in Fig. 9, the repeater system 900 includes a first repeater 960-1 that includes a transmitter (TX) 902-1, a receiver (RX) 904-1, an aggregator/dis-aggregator 910-1 that may be connected to one or more low speed interfaces (e.g., Universal Asynchronous Receiver/Transmitter (UART), Serial Wire Debug (SWD), or I2C), a system controller 915-1 that may be connected to I2C/I3C interface, a Clock Data Recovery (CDR) 920-1 that may be connected to a high speed interface, and a switch/multiplexer 925-1 and a second repeater 960-2 that includes a transmitter (TX) 902-2, a receiver (RX) 904-2, an aggregator/dis-aggregator 910-2 that may be connected to one or more low speed interfaces (e.g., Universal Asynchronous Receiver/Transmitter (UART), Serial Wire Debug (SWD), or I2C), a system controller 915-2 that may be connected to I2C/I3C interface, a Clock Data Recovery (CDR) 920-2 that may be connected to a high speed interface, and a switch/multiplexer 925-2. In the embodiment depicted in Fig. 9, the repeater system 900 is half-duplex, the TX 902-1 communicates with the RX 904-2 and the TX 902-2 communicates with the RX 904-1 over a serial channel (e.g., tying all four of the ports (2 TX and 2 RX) together) to implement both downstream and upstream traffic. The repeater system 900 may be an embodiment of the hybrid repeater re-timer system 100 depicted in Fig. 1 and/or the hybrid repeater re-timer system 600 depicted in Figs. 6A and 6B. For example, the TXs 902-1, 902-2 depicted in Fig. 9 may be an embodiment of the TX 102 depicted in Fig. 1 and/or the TX 602 depicted in Fig. 6A. In an example, the RXs 904-1, 904-2 depicted in Fig. 9 may be an embodiment of the RX 104 depicted in Fig. 1 and/or the RX 604 depicted in Fig. 6B. Each of the first repeater 960-1 and the second repeater 960-2 may be fully or partially implemented as an integrated circuit (IC) device. For example, the transmitter (TX) 902-1 and the receiver (RX) 904-1 are located in the same substrate and the repeater 960-1 is implemented as one IC device (e.g., a system on chip (SOC)) for bi-directional communications. In another example, the transmitter (TX) 902-2 and the receiver (RX) 904-2 are located in the same substrate and the repeater 960-2 is implemented as one IC device (e.g., a system on chip (SOC)) for bi-directional communications. Although the depicted repeater system 900 is shown in Fig. 9 with certain components and described with certain functionality herein, other embodiments of the repeater system 900 may include fewer or more components to implement the same, less, or more functionality. In addition, although the repeater system 900 is shown in Fig. 9 as being connected in a certain topology, the network topology of the repeater system 900 is not limited to the topology shown in Fig. 9. The repeater system 900 may be a wired communications system or a wireless communications system.

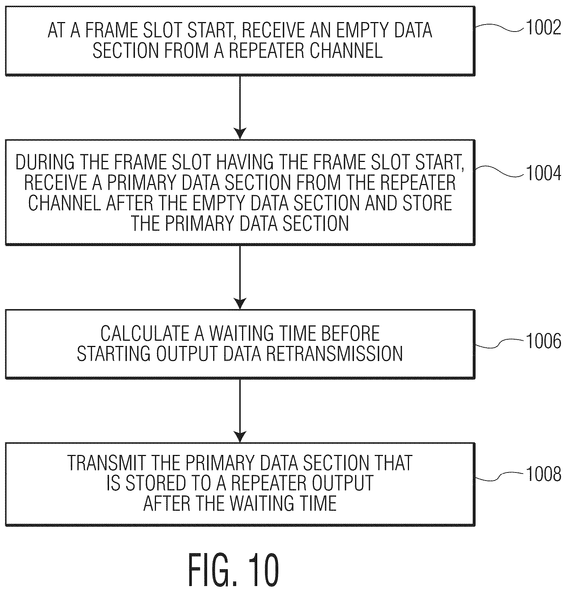

Fig. 10 is a process flow diagram of a method of operating a repeater in accordance with an embodiment of the invention. At block 1002, at a frame slot start, an empty data section is received from a repeater channel. At block 1004, during the frame slot having the frame slot start, a primary data section is received from the repeater channel after the empty data section and the primary data section is stored. At block 1006, a waiting time before starting output data retransmission is calculated. At block 1008, the primary data section that is stored is transmitted to a repeater output after the waiting time. The repeater may be the same as or similar to the receiver (RX) 104 depicted in Fig. 1, the hybrid repeater re-timer system 100 depicted in Fig. 1, the receiver (RX) 604 depicted in Fig. 6B, and/or the hybrid repeater re-timer system 600 depicted in Figs. 6A and 6B.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner. Although some examples described above may refer to USB protocols, however, the invention can be generalized to other protocols.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

**Claims**

1.  A repeater comprising:

    a buffer configured to store data that is received during a time distance between an input start and a frame slot start;
    a counter configured to calculate a waiting time before starting frame transmission; and
    a transmitter configured to transmit predefined data at the frame slot start over a repeater channel and to transmit the data that is stored in the buffer over the repeater channel after the waiting time from the frame slot start.

2.  The repeater of claim 1, wherein the predefined data comprises a plurality of zeros.

3.  The repeater of claim 1 or 2, wherein the transmitter is further configured to transmit the data that is stored in the buffer over the repeater channel in a frame slot having the frame slot start after the waiting time from the frame slot start.

4.  The repeater of any of claims 1 to 3, wherein the counter is further configured to generate a counter value that represents the waiting time, and wherein the transmitter is further configured to transmit the data that is stored in the buffer over the repeater channel in a frame slot having the frame slot start after the counter value reaches a predefined value.

5.  The repeater of claim 4, wherein the predefined value is zero.

6.  The repeater of any of claims 1 to 5, further comprising a receiver configured to receive the data during the time distance between the input start and the frame slot start.

7.  The repeater of any of claims 1 to 6, wherein the receiver is further configured to receive additional data in a frame slot having the frame slot start.

8.  The repeater of any of claims 1 to 7, wherein the transmitter is further configured to transmit the data that is stored in the buffer and the additional data over the repeater channel in the frame slot after the waiting time from the frame slot start.

9.  The repeater of any of claims 1 to 7, wherein the counter is further configured to calculate the waiting time before starting the frame transmission in a frame slot having the frame slot start.

10. The repeater of any of the claims 1 to 8, wherein the repeater is an embedded Universal Serial Bus (eUSB) repeater,

    wherein the counter is configured to calculate a waiting time before starting frame transmission in a frame slot having the frame slot start; and
    wherein the transmitter is configured to transmit a plurality of leading zeros at the frame slot start over a repeater channel and to transmit the data that is stored in the buffer over the repeater channel in the frame slot after the waiting time from the frame slot start.

11. A method of operating a repeater, the method comprising:

   storing data that is received during a time distance between an input start and a frame slot start;
   calculating a waiting time before starting frame transmission;
   transmitting predefined data at the frame slot start over a repeater channel; and
   transmitting the data that is stored over the repeater channel after the waiting time from the frame slot start.

12. The method of claim 11, wherein the predefined data comprises a plurality of zeros.

13. The method of claim 11 or 12, wherein transmitting the data that is stored over the repeater channel after the waiting time comprises transmitting the data over the repeater channel in a frame slot having the frame slot start after the waiting time from the frame slot start.

14. The method of any of claims 11 to 13, wherein calculating the waiting time before starting the frame transmission comprises generating a counter value that represents the waiting time, and wherein transmitting the data that is stored over the repeater channel after the waiting time comprises transmitting the data over the repeater channel in a frame slot having the frame slot start after the counter value reaches a predefined value.

15. The method of any of claims 11 to 14, further comprising receiving the data during the time distance between the input start and the frame slot start and additional data in a frame slot having the frame slot start.

FIG. 1

HUB/REPEATER ELECTRICAL CHARACTERISTICS

EP 4 787 177 A1

| PARAMTER | SYMBOL | CONDITIONS | MIN. | MAX. | UNITS |
|---|---|---|---|---|---|
| HIGH-SPEED HUB CHARACTERISTICS (AS MEASURED AT CONNECTORS): | | | | | |
| DRIVER CHARACTERISTICS (REFER TO TABLE 7-8) | | UPSTREAM FACING PORT AND DOWNSTREAM FACING PORTS CONFIGURED AS HIGH-SPEED | | | |
| HUB DATA DELAY (WITHOUT CABLE): | $T_{HSHDD}$ | SECTION 7.1.14.2 | | 36 HIGH-SPEED BIT TIMES + 4 ns | |
| HUB DATA JITTER: | | SPECIFIES BY EYE PATTERNS IN SECTION 7.1.2.2 | | | |
| HUB DELAY VARIATION RANGE: | $T_{HSHDV}$ | SECTION 7.1.14.2 | | 5 HIGH-SPEED BIT TIMES | |

200

FIG. 2

PRELIMINARY TIME DEFINITIONS

| PARAMTER | SYMBOL | FORMULA | DESCRIPTION |
|---|---|---|---|
| INPUT SPEED | $T_{HSDRAT}$ | | eUSB HIGH-SPEED DATA RATE |
| INPUT UNIT INTERVAL | IUI | $1/T_{HSDRAT}$ | eUSB HIGH-SPEED BIT TIMING INTERVAL |
| CHANNEL SPEED | $T_{FRDRAT}$ | | HYBRID REPEATER CHANNEL DATA RATE |
| CHANNEL UNIT INTERVAL | FUI | $1/T_{HSDRAT}$ | FRAME BIT TIMING INTERVAL |
| SPEED RATIO | SR | $T_{FRDRAT}/T_{CHDRAT}$ | FRAME RATE VS INTERFACE RATE |
| FRAME NUMBER | $N_{FR}$ | | NUMBER OF DATA PER FRAME |
| FRAME SLOT PERIOD | $T_{FR}$ | $N_{FR}*IUI$ | TIME BETWEEN SLOT START AND NEXT-SLOT START |
| FRAME SLOT DURATION | $T_{SLOT}$ | $N_{FR}*FUI=T_{FR}/SR$ | TIME BETWEEN SLOT START AND SLOT END |
| FRAME SLOT DISTANCE | $T_{DBS}$ | $T_{FR}-T_{SLOT} = T_{FR}*(SR-1)/SR$ | TIME BETWEEN SLOT-END AND NEXT-SLOT START |
| FIFO DELAY | $T_{PD}$ | $T_{PD1}+T_{PD2}$ | FIFO DELAY |

FIG. 3

| TIME INTERVAL | DESCRIPTION | -FROM | -TO | FORMULA |
|---|---|---|---|---|
| T1 | SLOT WAIT | INPUT-RX-START | SLOT-TX-START | $0 < T1 < TDBS$; $N_{T1} = T1/IUI$ |
| T2 | FRAME TX WAIT | SLOT-TX-START | SLOT-TX-VALID | $T2 = T_{SLOT}$ $T3 = (T_{FR} T1)/SR$ |
| T3 | FRAME TX | SLOT-TX-VALID | SLOT-TX-END | $T3 = N_{T1} * FUI = T1/SR$ |
| T4 | OUTPUT TX WAIT | SLOT-RX-VALID | OUTPUT-TX-START | $T4 = TFR-T2-T5 = TFR- T2-T1 = (TFR-T1)/SR = T2$ |
| T5 | OUTPUT TX | OUTPUT-TX-START | SLOT-RX-START | $T5 = N_{T1} * IUI = T1$ |
| $T_{PD}$ | PROPAGATION DELAY | INPUT-RX-START | OUTPUT-TX-START | $T_{PD} = T1+T2+T4 = T1+T2+T_{FR}-T2-T1 = T_{FR}$ |

FIG. 4

EP 4 787 177 A1

500

| TIME INTERVAL | DESCRIPTION | -FROM | -TO | FORMULA |
|---|---|---|---|---|
| T1 | SLOT WAIT | INPUT-RX-START | SLOT-TX-START | $0 < T1 < TDBS;$ $N_{T1+TSLOT} = (T1 + T_{SLOT})/IUI$ |
| T2 | FRAME TX WAIT | SLOT-TX-START | SLOT-TX-VALID | $T2 = T_{SLOT} T3 =$ $(T_{FR} T1)/SR - T_{FR}/SR^2$ |
| T3 | FRAME TX | SLOT-TX-VALID | SLOT-TX-END | $T3 = (T1+T_{SLOT})/IUI*FIUI$ $= T1/SR + T_{FR}/SR^2$ |
| T4 | OUTPUT TX WAIT | SLOT-RX-VALID | OUTPUT-TX-START | $T4 = TFR-T2-T5 = TFR-T2-$ $T1-T_{FR}/SR = T2(SR-1)$ |
| T5 | OUTPUT TX | OUTPUT-TX-START | SLOT-RX-START | $T5 = (T1+T_{SLOT})/IUI*IUI$ $T1+T_{FR}/SR$ |
| $T_{PD}$ | PROPAGATION DELAY | INPUT-RX-START | OUTPUT-TX-START | $T_{PD} = T1+T2+T4 =$ $T_{FR}*(SR-1)/SR = T_{DBS}$ |

FIG. 5

FIG. 6A

FIG. 6B

EP 4 787 177 A1

STORE DATA THAT IS RECEIVED DURING A TIME DISTANCE
BETWEEN AN INPUT START AND A FRAME SLOT START    702

CALCULATE A WAITING TIME
BEFORE STARTING FRAME TRANSMISSION    704

TRANSMIT PREDEFINED DATA AT THE FRAME SLOT
START OVER A REPEATER CHANNEL    706

TRANSMIT THE DATA THAT IS STORED OVER THE
REPEATER CHANNEL AFTER THE WAITING TIME
FROM THE FRAME SLOT START    708

FIG. 7

FIG. 8

EP 4 787 177 A1

FIG. 9

```
┌─────────────────────────────────────────────────┐
│  AT A FRAME SLOT START, RECEIVE AN EMPTY DATA     │─── 1002
│     SECTION FROM A REPEATER CHANNEL               │
└─────────────────────────────────────────────────┘
                        │
                        ▼
┌─────────────────────────────────────────────────┐
│  DURING THE FRAME SLOT HAVING THE FRAME SLOT START,│─── 1004
│  RECEIVE A PRIMARY DATA SECTION FROM THE REPEATER  │
│  CHANNEL AFTER THE EMPTY DATA SECTION AND STORE    │
│         THE PRIMARY DATA SECTION                   │
└─────────────────────────────────────────────────┘
                        │
                        ▼
┌─────────────────────────────────────────────────┐
│       CALCULATE A WAITING TIME BEFORE             │─── 1006
│     STARTING OUTPUT DATA RETRANSMISSION           │
└─────────────────────────────────────────────────┘
                        │
                        ▼
┌─────────────────────────────────────────────────┐
│    TRANSMIT THE PRIMARY DATA SECTION THAT         │─── 1008
│       IS STORED TO A REPEATER OUTPUT              │
│          AFTER THE WAITING TIME                   │
└─────────────────────────────────────────────────┘
```

FIG. 10

## EUROPEAN SEARCH REPORT

Europäisches
Patentamt

European
Patent Office

Office européen
des brevets

**Application Number**

**EP 26 15 2219**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/336334 A1 (GILBERT JEFFREY M [US] ET AL) 19 December 2013 (2013-12-19) * paragraph [0022] - paragraph [0109]; figures 1-4, 8A * ----- | 1-15 | INV. G06F13/40 |
| A | US 2008/069026 A1 (CHAN MAN CHI [CN] ET AL) 20 March 2008 (2008-03-20) * paragraph [0005] - paragraph [0028] * ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 27 May 2026 | Rudolph, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 787 177 A1

## ANNEX TO THE EUROPEAN SEARCH REPORT
## ON EUROPEAN PATENT APPLICATION NO.

EP 26 15 2219

This annex lists the patent family members relating to the patent documents cited in  the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | | Publication date |
|---|---|---|---|---|
| US 2013336334 A1 | 19-12-2013 | CN | 104365034 A | 18-02-2015 |
| | | EP | 2862290 A1 | 22-04-2015 |
| | | JP | 6150886 B2 | 21-06-2017 |
| | | JP | 2015527775 A | 17-09-2015 |
| | | KR | 20150030243 A | 19-03-2015 |
| | | TW | 201408024 A | 16-02-2014 |
| | | US | 2013336334 A1 | 19-12-2013 |
| | | WO | 2013188571 A1 | 19-12-2013 |
| US 2008069026 A1 | 20-03-2008 | US | 2008069026 A1 | 20-03-2008 |
| | | WO | 2008034369 A1 | 27-03-2008 |

EPO FORM P0459

For more details about this annex : see Official Journal of the European Patent Office, No. 12/82

27